# EUROPÄISCHE PATENTSCHRIFT

(11) **EP 3 825 731 B1**
(45) Veröffentlichungstag und Bekanntmachung des Hinweises auf die Patenterteilung: **05.01.2022**
(21) Anmeldenummer: 19210538.5
(22) Anmeldetag: 21.11.2019
(51) Int. Cl.: G01S 17/894, G01S 17/931

(54) **OPTOELEKTRONISCHER SICHERHEITSSENSOR UND VERFAHREN ZUR SICHEREN BESTIMMUNG DER EIGENEN POSITION**
OPTOELECTRONIC SAFETY SENSOR AND METHOD FOR GUARANTEED DETERMINATION OF OWN POSITION
CAPTEUR OPTOÉLECTRONIQUE DE SÉCURITÉ ET PROCÉDÉ DE DÉTERMINATION SÉCURISÉE DE POSITION PROPRE

(43) Veröffentlichungstag der Anmeldung: 26.05.2021
(73) Patentinhaber: SICK AG, 79183 Waldkirch (DE)
(72) Erfinder: Sigmund, Jörg, 79341 Kenzingen (DE); Hammes, Markus, 79117 Freiburg (DE)

(56) Entgegenhaltungen:
- US-A1- 2010 061 591
- US-A1- 2017 177 958
- US-A1- 2019 332 120

## Beschreibung

Die Erfindung betrifft einen optoelektronischen Sicherheitssensor und ein Verfahren zur sicheren Bestimmung einer eigenen Position nach dem Oberbegriff von Anspruch 1 beziehungsweise 10.

Das primäre Ziel der Sicherheitstechnik ist, Personen vor Gefahrenquellen zu schützen, wie sie beispielsweise Maschinen im industriellen Umfeld darstellen. Die Maschine wird mit Hilfe von Sicherheitssensoren überwacht, und wenn demnach eine Situation vorliegt, in der eine Person gefährlich nahe an die Maschine zu gelangen droht, wird eine geeignete Absicherungsmaßnahme ergriffen.

Eine große Klasse von mit Sicherheitssensoren abzusichernden Maschinen bilden die Fahrzeuge sowohl in abgeschlossenen Umgebungen speziell im Bereich der Fabrik- und Logistikautomatik als auch auf öffentlichen Straßen. Das betrifft praktisch alle denkbaren Fahrzeuge, seien es solche mit Fahrer wie PKW, LKW, Arbeitsmaschinen und Gabelstapler oder führerlose Fahrzeuge wie AGVs (Automated Guided Vehicle), AMR (Autonomous mobile robot) oder Flurförderzeuge.

Sicherheitssensoren oder sichere Sensoren, d.h. im Sinne der Sicherheitstechnik für den Personenschutz eingesetzte Sensoren, müssen besonders zuverlässig arbeiten und deshalb hohe Sicherheitsanforderungen erfüllen, beispielsweise die Norm EN13849 für Maschinensicherheit und die Gerätenorm IEC61496 oder EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile.

Das gängige Absicherungskonzept sieht vor, dass Schutzfelder konfiguriert werden, die während des Betriebs der Maschine vom Bedienpersonal nicht betreten werden dürfen. Bei einem Fahrzeug dreht sich diese Betrachtung auch um, es dürfen weder Personen in den Fahrweg treten, noch darf das Fahrzeug sich zu schnell in eine Richtung bewegen, in der sich Personen aufhalten. Erkennt der Sensor einen unzulässigen Schutzfeldeingriff, so löst er eine sicherheitsgerichtete Reaktion aus, die in einem Abbremsen, Ausweichen oder notfalls einem sofortigen Stopp der Maschine besteht.

In komplexen dynamischen Umgebungen, wie regelmäßig bei einem Fahrzeug, müssen die Schutzfelder situationsabhängig umgeschaltet werden. Dadurch erfolgt eine Anpassung an Fahrzeugzustände wie Geschwindigkeit und Beladung, an externe Prozessabläufe sowie an umgebende Szenerien. Beispielsweise werden an Engstellen schmalere Schutzfelder verwendet, um passieren zu können, oder beim Anfahren an eine Materialübergabestation wird das Schutzfeld Stück für Stück verkürzt.

Das Umschalten wird von einer externen Sicherheitssteuerung über einen sicheren Eingang oder als entsprechende Anweisung über einen sicheren Feldbus initiiert, wobei das Triggersignal von externen Signalgebern wie beispielsweise induktiven Markern ausgeht. Die Umschaltung ist sicherheitsrelevant, da falsche Schutzfelder die Gefahr nicht angemessen absichern, etwa wenn irrtümlich auf ein zu kurzes Schutzfeld bei weiterhin hoher Fahrzeuggeschwindigkeit umgeschaltet würde. Somit ist eine Anzahl sicherer Eingänge oder eine sichere höherwertige Feldbus-Schnittstelle erforderlich. Das bedeutet in jedem Fall einen zusätzlichen Hardwareaufwand, und kleine, kompakte Sensoren bieten gar nicht den Bauraum dafür. Zudem ist weiterer Aufwand in der Anwendung für die Erzeugung des Triggersignals und die entsprechenden Schnittstellen zum Sensor erforderlich.

Für Sicherheitslaserscanner mit Überwachung einer Ebene ist auch bekannt, eine Referenzkontur in der Umgebung einzulernen. Wird eine solche vordefinierte Kontur erkannt, kann das Fahrzeug individuell darauf reagieren, beispielsweise eine Beladeposition, eine Gangeinfahrt oder den Wechsel einer Halle erkennen und die Schutzfelder darauf anpassen. Die auf eine Ebene begrenzte Konturerkennung ist aber in vielen Fällen nicht eindeutig, besonders wenn im Arbeitsbereich des Fahrzeugs eine Vielzahl identischer oder ähnlicher Maschinen verwendet wird. Ein praxisrelevantes Beispiel stellen identische Untergestelle einer Materialübergabestelle dar. Sie werden von dem Laserscanner nicht unterschieden. Oberhalb können jedoch aufgrund unterschiedlicher Fördergüter individuelle Schutzfeldgeometrien zur Gefährdungsvermeidung erforderlich sein. Problematisch sind auch Veränderungen der Umgebungskontur durch bewegliche Objekte. Die Information einer Scankontur reicht dann nicht aus, um flexibel auf Störungen zu reagieren und zuverlässig die eigene Position zu ermitteln.

Der Stand der Technik kennt 3D-Sensoren zur Erfassung dreidimensionaler Bilddaten. Dazu zählen vor allem 3D-Kameras in unterschiedlichen Technologien, beispielsweise Stereoskopie, Triangulation, Lichtlaufzeit, mit Auswertung der Störung passiver zweidimensionaler Muster oder von projizierten Beleuchtungsmustern. Solche 3D-Sensoren nehmen im Gegensatz zu einer üblichen zweidimensionalen Kamera Bilder auf, die in ihren Pixeln einen Abstandswert enthalten. Diese tiefenaufgelösten oder dreidimensionalen Bilddaten werden auch als Tiefenkarte bezeichnet. Weiterhin bekannt sind Laserscanner, die mehrere Abtastebenen erfassen oder ihren Elevationswinkel variieren. Solche 3D-Sensoren sind selten sicher im oben definierten Sinne der Sichertechnik. Sie sind dann auf statische Überwachungen beschränkt, beispielsweise einer Roboterzelle von der Decke aus.

Aus der DE 10 2005 011 143 A1 oder der EP 1 635 107 A1 ist bekannt, Schutzfelder an die Position von Maschinen oder Maschinenteilen anzupassen. Dabei wird die Position von der Maschine bestimmt, wodurch weiterhin entsprechende Schnittstellen gebraucht werden. Alternativ bestimmt der Sensor die Maschinenposition selbst, jedoch aus einer externen Betrachtung der Maschine, und dieser Perspektive ist für größere Bewegungen oder gar ein Fahrzeug untauglich.

In der EP 2 315 052 B1 sichern Laserscanner eine Kreuzung eines Förderers und eines Übergangs durch Umschalten von Schutzfeldern ab. Je nachdem, ob sich ein Gefährdungsobjekt der Kreuzung näher oder auf der Kreuzung befindet, geben die jeweils aktiven Schutzfelder die Kreuzung für Personen frei oder nicht. Das Gefährdungsobjekt wird an Kontur, Position, Orientierung und Geschwindigkeit erkannt. Erneut ist dies eine Betrachtung aus einer äußeren Perspektive in einer festen Montageposition der Laserscanner.

Die EP 2 339 376 B1 offenbart einen Laserscanner auf einem Fahrzeug, der seine Schutzfelder beim Durchfahren eines Korridors einpasst, damit nicht die seitlichen Begrenzungen durch Toleranzen der Fahrrichtung das Schutzfeld verletzen. Das geschieht relativ zur jeweils erfassten Umgebung, seine eigene Position in der Halle oder bezüglich irgendeines anderen absoluten Referenzsystems ist dem Laserscanner unbekannt und für die Einpassung auch nicht erforderlich.

Die DE 10 2005 003 254 B4 schlägt vor, einen optoelektronischen Sensor zu konfigurieren, indem ihm ein Code mit optischen Parameterkodierungen präsentiert wird, die auch Schutzfeldgrenzen beinhalten können. Allerdings wird der Code eigens in das Sichtfeld gehalten und in keiner Weise mit einer Bestimmung der eigenen Position des Sensors verknüpft, zumal der Sensor ohnehin statisch an einer Presse montiert ist.

In der DE 10 2004 038 906 B4 werden Objekte auf einem Förderband mit einer kontaktlos erfassten Marke versehen, um damit einen Mutingbereich eines Lichtgitters einzustellen. Das hat wieder nichts mit einer Positionsbestimmung des Lichtgitters zu tun, dessen feste Position an dem Förderband auch nicht variiert.

Die EP 3 330 740 A1 offenbart einen weiteren Laserscanner zur Überwachung eines Schutzfeldes, bei dem eine Teil der Schutzfeldgrenze durch die Kontur eines zulässigen Objekts ersetzt wird. Hier ist es das erfasste Objekt und nicht die eigene Position, das bestimmt und an das ein Schutzfeld angepasst wird.

Aus der US 2019/0332120 A1 ist ein Verfahren zur Bestimmung der Position eines Fahrzeugs bekannt, wobei eine Kamera mit deren zweidimensionalen Bildern und/oder ein LIDAR mit dessen dreidimensionalen Rauminformationen als Positionssensor fungiert. Eine hochaufgelöste Karte mit entsprechenden zwei- und dreidimensionalen Informationen zur Positionsbestimmung ist vorgegeben. Auf Basis der erkannten Position fährt das Fahrzeug autonom.

Die US 2017/0177958 A1 (D2) offenbart eine Zielerkennungsvorrichtung für ein Fahrzeug. Das System bestimmt seine eigene Position immer wieder anhand von Landmarken und in den Phasen dazwischen durch Überwachung der Eigenbewegung. Es kennt außerdem aus einer Karte die Position des Ziels und setzt dementsprechend einen Bildbereich, in dem das Ziel erwartet wird.

Die US 2010/0061591 A1 befasst sich mit einer Objekterkennungsvorrichtung für ein Fahrzeug. Wiederum sind aus einer Karte die Positionen von Zielobjekten bekannt. Anhand einer geschätzten Eigenposition setzt das Fahrzeug einen Entfernungsbereich, in dem die Zielobjekte gesucht werden, um den Auswertungsaufwand zu reduzieren.

Es ist daher Aufgabe der Erfindung, eine verbesserte Absicherung in dynamischen Umgebungen zu erreichen.

Diese Aufgabe wird durch einen optoelektronischen Sicherheitssensor und ein Verfahren zur sicheren Bestimmung einer eigenen Position nach Anspruch 1 beziehungsweise 10 gelöst. Der Sicherheitssensor ist vorzugsweise in mobiler Anwendung eingesetzt und dafür mit einem Fahrzeug oder einem Maschinenteil mitbewegt montiert. Sicherheit oder sicher ist wie im Bereich der Sicherheitstechnik üblich im Sinne des Personenschutzes gemeint. Die konkreten Anforderungen sind in Sicherheitsnormen zum Personenschutz spezifiziert, von denen einleitend einige genannt sind. Die Sicherheitsnormen können sich im Laufe der Zeit verändern, nicht aber hinsichtlich der Grundprinzipien: Fehler werden durch Maßnahmen wie Redundanz, Diversität oder Tests mit einer durch Sicherheitsniveaus definierten Verlässlichkeit abgefangen oder zumindest aufgedeckt.

Ein Lichtempfänger des Sicherheitssensors erzeugt Erfassungsdaten eines Überwachungsbereichs, mit deren Hilfe von eine Steuer- und Auswertungseinheit die eigene Position des Sicherheitssensors beziehungsweise des Fahrzeugs oder Maschinenteils auf sichere Weise bestimmt wird, an dem der Sicherheitssensor montiert ist. Die Position kann in Koordinaten eines beliebigen Referenzsystems bestimmt sein, beispielsweise in Weltkoordinaten einer Industriehalle. Es genügt aber, wenn die Position einfach als eine bestimmte Position identifiziert ist. Damit kann positionsspezifisch eine sicherheitsrelevante Funktion des Sicherheitssensors oder eines Systems ausgelöst werden, in dem der Sicherheitssensor angeschlossen ist.

Die Erfindung geht von dem Grundgedanken aus, den Sicherheitssensor zu einem 3D-Sicherheitssensor zu erweitern. Die Erfassungsdaten sind dann dreidimensionale Bilddaten. Je nach Erfassungsprinzip werden die dreidimensionalen Bilddaten schon im Lichtempfänger erzeugt, wie bei einer Lichtlaufzeitkamera mit einem Bildsensor aus intelligenten Pixeln oder einem 3D-Scanner, erst in der Steuer- und Auswertungseinheit, wie bei einer Stereokamera durch Anwenden eines Stereoalgorithmus', oder in einem Zusammenspiel aus Lichtempfänger und Steuer- und Auswertungseinheit. Die eigene Position wird anhand dreidimensionaler Merkmale bestimmt.

Die Erfindung hat den Vorteil, dass durch den größeren Informationsgehalt der dreidimensionalen Bilddaten und der dreidimensionalen Merkmale komplexere Sicherheitsanwendungen und Automatisierungsaufgaben möglich werden. Eine Position wird auch dann eindeutig erkannt, wenn sie aufgrund identischer Konturen in zwei Dimensionen von einem herkömmlichen Laserscanner mit nur einer Überwachungsebene nicht unterschieden werden könnte. Dank der sicheren Positionserkennung direkt aus den eigenen Erfassungsdaten kann auf eine Vielzahl sicherer Eingänge oder eine hochwertige Kommunikationsschnittstelle verzichtet werden. Das ermöglicht auch eine besonders große Anzahl von Positionen, die sicher erfasst werden und an denen eine sicherheitsrelevante Funktion ausgelöst wird. Soweit eine angeschlossene Sicherheitssteuerung überhaupt noch erforderlich ist, kann sie weniger leistungsfähig bleiben, da der Sicherheitssensor selbst für positionsabhängige Umschaltungen und Anpassungen verantwortlich ist.

Die Steuer- und Auswertungseinheit ist bevorzugt dafür ausgebildet, eine Position anhand einer bekannten dreidimensionalen Kontur an dieser Position zu erkennen. Die Kontur ist beispielsweise als Referenzkontur gespeichert und betrifft markante Ausschnitte oder das gesamte dreidimensionale Bild.

Die Erfassungsdaten weisen bevorzugt zweidimensionale Bilddaten auf, und die Steuer- und Auswertungseinheit ist dafür ausgebildet, die eigene Position anhand der zweidimensionalen Bilddaten und zweidimensionaler Merkmale zu bestimmen. Es wird also zusätzlich zu den dreidimensionalen Bilddaten ein übliches Intensitäts- beziehungsweise Grauwert- oder auch Farbbild aufgenommen. Die gängigen 3D-Aufnahmeprinzipien lassen es zu, dieses zweidimensionale Bild mit demselben Lichtempfänger zu gewinnen. Dafür wird in einem Bildsensor einer Lichtlaufzeitkamera das Empfangssignal insgesamt und nicht nur phasenspezifisch integriert, bei einer Stereokamera eines der Ausgangsbilder verwendet oder bei einem 3D-Scanner nicht nur ein Abstand, sondern auch die Intensität einer jeweiligen Abtastung bestimmt. Durch die zusätzliche zweidimensionale Auswertung werden diversitär-redundant weitere Merkmale in die Auswertung einbezogen, und so wird durch eine Kombination aus zweidimensionaler und dreidimensionaler Auswertung die Sicherheit der Positionsbestimmung erhöht.

Die Steuer- und Auswertungseinheit ist bevorzugt dafür ausgebildet, künstliche Marker zu erfassen, insbesondere eine Referenzkontur oder einen optischen Code, und für die Bestimmung der eigenen Position zu verwenden. Die Steuer- und Auswertungseinheit hat somit eine Erwartungshaltung für die künstlichen Marker. Im Gegensatz zu einem natürlichen Marker, also einer Kontur oder Struktur der vorhandenen Szenerie, werden künstlicher Marker eigens platziert, um eine bestimmte sichere Position verlässlich erkennen zu können. Durch künstliche Marker als zusätzliches Merkmal kann die Sicherheit der Positionserkennung weiter erhöht werden, und gerade bei baugleichen oder ähnlichen Konturen schafft der künstliche Marker Eindeutigkeit.

Die Steuer- und Auswertungseinheit ist bevorzugt dafür ausgebildet, eine in dem künstlichen Marker codierte Positionsinformation und/oder Handlungsanweisung auszulesen. Dazu eigenen sich insbesondere Barcodes oder zweidimensionale optische Codes. Durch das Auslesen solcher Codes erkennt der Sicherheitssensor nicht nur, dass eine bestimmte Stelle im Überwachungsbereich markiert ist, sondern erhält von dort noch konkrete Informationen oder Anweisungen. Die Positionsinformation kann sich auf die Identität des Markers beschränken, die dann im Sicherheitssensor eindeutig mit einer bestimmten sicherheitsrelevanten Funktion verknüpft wird. Mit einer Positionsinformation in dem Sicherheitssensor bekannten Koordinaten kann sich der Sicherheitssensor insgesamt orientieren und beispielsweise die ausgelesene Positionsinformation mit einer eigenen Annahme an die Position abgleichen. Über eine Handlungsanweisung werden in dem Sicherheitssensor direkt bestimmte sicherheitsrelevante oder sonstige Funktionen ausgelöst.

Die Steuer- und Auswertungseinheit ist bevorzugt dafür ausgebildet, konfigurierte Felder innerhalb des Überwachungsbereichs auf Objekteingriffe zu überwachen und die eigene Position anhand verletzter und nicht verletzter Felder zu bestimmen. Ein solcher Sicherheitssensor arbeitet mit dem einleitend erläuterten Schutzfeldkonzept. Dieses kann auch für die Positionserkennung genutzt werden. Es werden lediglich Felder ausgewertet, die an einer wiederzuerkennenden Position in spezifischen Muster verletzt werden. Die Schutzfelder werden dabei gleichsam als grobe Pixel oder Voxel der zu erkennenden Kontur genutzt. Dann muss nämlich keine neue sichere dreidimensionale Auswertung geschaffen werden, sondern es wird die bewährte sichere Schutzfeldüberwachung ausgenutzt. Zumindest diejenigen Felder, bei denen in der zu erkennenden Position ein Eingriff erwartet wird, sind hinsichtlich ihrer Schutzfunktion vorzugsweise stumm geschaltet, damit nicht die Positionserkennung eine unnötige sicherheitsgerichtete Reaktion auslöst.

Die Steuer- und Auswertungseinheit ist bevorzugt dafür ausgebildet, die eigene Position über die Zeit zu verfolgen und so zu plausibilisieren. In einer einfachen Umsetzung sind lediglich übliche Fahrzeiten zwischen den hinterlegten sicher erkennbaren eigenen Positionen hinterlegt, die dann mit der Historie der tatsächlich erkannten eigenen Positionen verglichen werden. Aus der Navigation sind aber auch komplexere Verfahren zur Navigation bekannt, die mit Karten vergleichen, eine Art Indoor-GPS oder eine eigene IMU-Einheit (Inertial Measurement System) verwenden oder anhand der Erfassungsdaten eine Umgebungskarte erzeugen und sich darin orientieren (SLAM, Simultaneous Localisation and Measurement). Es sei angemerkt, dass alle diese Verfahren allein nicht sicher im hier geforderten Sinne sind.

Die Steuer- und Auswertungseinheit ist vorzugsweise für eine sichere Bestimmung der eigenen Orientierung ausgebildet. Es wird also nicht nur die Position bestimmt, sondern auch die eigene Drehstellung oder Perspektive an dieser Position. Dafür weist der Sicherheitssensor insbesondere einen Lagesensor auf, oder es wird der Boden in den dreidimensionalen Bilddaten erkannt und dessen Orientierung bestimmt. Das dient beispielsweise dazu, Schutzfelder richtig im dreidimensionalen Raum anzuordnen.

Die Steuer- und Auswertungseinheit ist vorzugsweise für eine Transformation von Bilddaten anhand der Orientierung ausgebildet. So wird die Positionserkennung robust gegenüber Toleranzen der Orientierung, beispielsweise wenn sich Nick- oder Rollwinkel durch Beladung oder Beschleunigung verändern. Durch entsprechende Transformation der zwei- oder dreidimensionalen Bilddaten beziehungsweise eine alternative Transformation entsprechender Referenzbilddaten wird die Orientierung aus dem Vergleich zum Wiedererkennen von Merkmalen herausgerechnet.

Die Steuer- und Auswertungseinheit ist in einer erfindungsgemäßen Alternative dafür ausgebildet, als positionsspezifische Funktion eine Umschaltung von Schutzfeldern vorzunehmen. Das Sicherheitskonzept sieht demnach die Überwachung von Schutzfeldern vor, die aber jeweils nur für bestimmte Positionen oder Teilbereiche passen und dementsprechend umgeschaltet werden, wenn der Sicherheitssensor feststellt, dass die eigene Position einer Position für eine vorgesehene Umschaltung von Schutzfeldern entspricht. In manchen Situationen wird vorzugsweise nicht auf starre Schutzfelder umgeschaltet, sondern eine Sequenz von Schutzfeldern, die eine folgende fest vorgesehene eigene Bewegung oder Bewegung in der Umgebung absichern, insbesondere einen Be- oder Entladevorgang oder einen Bearbeitungsschritt.

Die Steuer- und Auswertungseinheit ist in einer erfindungsgemäßen Alternative dafür ausgebildet, als positionsspezifische Funktion eine sicherheitsrelevante Konfigurationsänderung des Sicherheitssensors vorzunehmen, insbesondere das Detektionsvermögen, eine Anzahl von Mehrfachauswertungen und wahlweise eine Belichtungszeit zu verändern. In sicherheitstechnischen Anwendungen wird typischerweise gefordert, dass ein Objekt mit bestimmter Mindestgröße beziehungsweise bestimmten Mindestabmessungen sicher erkannt wird. Diese Eigenschaft wird als Detektionsvermögen bezeichnet. An einer erkannten Position wird beispielsweise von Beinschutz auf Fingerschutz umgeschaltet. Mehrfachauswertungen bedeutet, dass ein sicherheitskritisches Ereignis in m aus n Wiederholungen bestätigt werden muss, ehe es eine sicherheitsgerichtete Reaktion auslöst, und diese Parameter m beziehungsweise n können positionsabhängig verändert werden. Die Belichtungs- oder Integrationszeit kann beispielsweise verändert werden, wenn ab der jeweils erkannten Position eher kürzere oder längere Abstände gemessen werden. Allgemein kann einer Position eine beliebige teilweise oder vollständige Konfiguration des Sicherheitssensors zugeordnet werden, und dafür sind keine besonderen Schnittstellen des Sicherheitssensors erforderlich.

Die Steuer- und Auswertungseinheit ist bevorzugt dafür ausgebildet, als positionsspezifische Funktion einen Selbsttest auszulösen, insbesondere anhand von Referenzerfassungsdaten auf Nachlassen der Sensorempfindlichkeit oder eine Verschmutzung von optisch wirksamen Elementen des Sicherheitssensors zu prüfen. Der Vorteil eines Selbsttests an einer bestimmten, sicher erkannten Position ist die klare Erwartungshaltung, mit der eine nachlassende oder gar ausgefallene Teilfunktion besonders verlässlich geprüft werden kann.

Die Steuer- und Auswertungseinheit ist bevorzugt für eine Einlernfunktion ausgebildet, mit der auf Anforderung oder selbstständig Merkmale zum späteren sicheren Wiedererkennen einer Position bestimmt und gespeichert werden. So werden beispielsweise Konturen als dreidimensionale Merkmale an den später sicher zu erkennenden eigenen Positionen eingelernt. Der Sicherheitssensor sucht sich dabei die dreidimensionalen Merkmale vorzugsweise selbsttätig.

Die Steuer- und Auswertungseinheit ist bevorzugt dafür ausgebildet, eine Anforderung für das Anbringen eines künstlichen Markers auszugeben. Das ist besonders dann vorteilhaft, wenn der Sicherheitssensor beim Einlernen einer Position feststellt, dass die natürlichen Marker der Umgebung nicht für ein verlässliches, eindeutiges Wiedererkennen ausreichen.

Der Sicherheitssensor ist bevorzugt für eine autarke Bestimmung der eignen Position ausgebildet. Die Positionserkennung basiert dann allein auf den eigenen Erfassungsdaten. Das Bereitstellen einer sicheren eigenen Position und das Ableiten eines Auslösers für eine sicherheitsrelevante Funktion ist in einem Gerät gekapselt.

Die Steuer- und Auswertungseinheit ist bevorzugt dafür ausgebildet, die eigene Position und/oder Orientierung an ein übergeordnetes System auszugeben. Dadurch kann ein übergeordnetes System eine Absicherung übernehmen oder ergänzen. Denkbar ist weiter, dass ein Prozessschritt gestartet wird, etwa indem sich das Fahrzeug an einem Übergabepunkt zum Be- oder Entladen oder sich für einen Bearbeitungsschritt an einer Maschine oder einem Roboter meldet. Weiterhin ist eine Kommunikation zu einer Fahrzeugsteuerung vorstellbar.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Sicherheitssensors;
- Fig. 2: eine Darstellung eines Fahrwegs eines Fahrzeugs mit mehreren beispielhaften sicher erkannten eigenen Positionen; und
- Fig. 3: eine schematische Darstellung eines Fahrzeugs, das seine eigene Position anhand eines Musters der Verletzung seiner Schutzfelder erkennt.

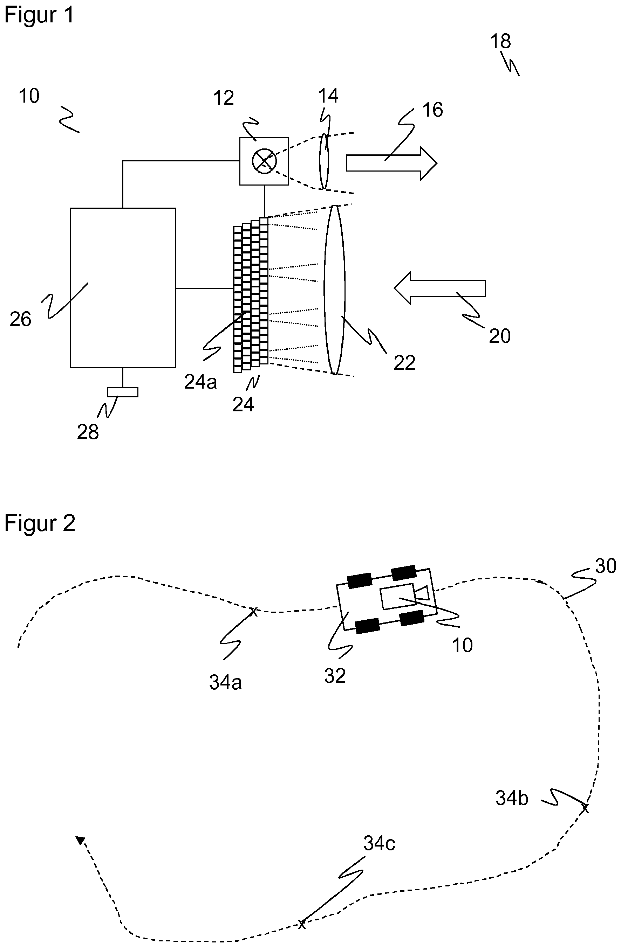

Figur 1 zeigt eine schematische Blockdarstellung eines Sicherheitssensors 10 in einer Ausführungsform als 3D-Lichtlaufzeitkamera (TOF, Time of Flight). Der Sicherheitssensor 10 dient dazu, eine bewegliche Maschine abzusichern. Beispiele sind Be- und Entladeprozesse von Maschinen, die komplexen Arbeitsschritte eines Roboters sowie die Bewegung eines Fahrzeugs.

Eine Beleuchtungseinheit 12 sendet durch eine Sendeoptik 14 moduliertes Sendelicht 16 in einen Überwachungsbereich 18 aus. Als Lichtquelle kommen LEDs oder Laser in Form von Kantenemittern oder VCSEL in Betracht. Die Beleuchtungseinheit 12 ist derart ansteuerbar, dass die Amplitude des Sendelichts 16 mit einer Frequenz typischerweise im Bereich von 1 MHz bis 1000 MHz moduliert wird. Die Modulation ist beispielsweise sinus- oder rechteckförmig, jedenfalls eine periodische Modulation.

Trifft das Sendelicht 16 in dem Überwachungsbereich 18 auf ein Objekt, so wird ein Teil als Empfangslicht 20 zu dem Sicherheitssensor 10 zurückgeworfen und dort durch eine Empfangsoptik 22, beispielsweise eine Einzellinse oder ein Empfangsobjektiv, auf einen Bildsensor 24 geführt. Der Bildsensor 24 weist eine Vielzahl von beispielsweise zu einer Matrix oder Zeile angeordneten Lichtempfangselementen oder Empfangspixeln 24a auf. Die Auflösung des Bildsensors 24 kann von zwei oder einigen bis hin zu tausenden oder Millionen Empfangspixeln 24a reichen. In den Empfangspixeln 24a wird das Empfangssignal mit der gleichen Frequenz demoduliert, die auch für die Modulation des Sendelichts 16 verwendet wird (Lock-In-Verfahren). Durch mehrere phasenrichtige Integrationen werden Abtastungen des Empfangssignals vorgenommen, aus dem sich der Phasenversatz zwischen Sendelicht 16 und Empfangslicht 20 und dadurch der Abstand zu dem angetasteten Objekt rekonstruieren lässt.

Eine Steuer- und Auswertungseinheit 26 ist mit der Beleuchtungseinheit 12 und dem Bildsensor 24 verbunden, um die Lichtlaufzeitmessung zu koordinieren und die dreidimensionalen Bilddaten aus dem Bildsensor 24 auszulesen. Zusätzlich kann etwa durch Integration über alle Phasen ein zweidimensionales Bild gewonnen werden. Die Steuer- und Auswertungseinheit 26 wertet die Bilddaten aus, um auf sichere Weise eine eigene Position des Sicherheitssensors 10 zu bestimmen. Außerdem ist hier vorzugsweise eine Schutzfeldüberwachung implementiert, mit der vorgegebene konfigurierte Teilbereiche des Überwachungsbereichs 18 auf sicherheitsrelevante Eingriffe überwacht werden.

Eine sichere Schnittstelle 28 ist als OSSD (Output Signal Switching Device) ausgebildet, um direkt oder über eine Sicherheitssteuerung eine sicherheitsgerichtete Reaktion der mit dem Sicherheitssensor 10 abgesicherten mobilen Maschine auszulösen. Denkbar ist, dass stattdessen oder zusätzlich die sicher erkannte eigene Position ausgegeben wird.

Die Ausführungsform des Sicherheitssensors 10 als 3D-Lichtlaufzeitkamera ist nur ein Beispiel. Alternativ kann der Sicherheitssensor 10 ein anderer optoelektronischer 3D-Sensor sein, beispielsweise eine Stereokamera, eine Kamera mit Auswertung eines projizierten Beleuchtungsmusters oder ein 3D-Scanner in Form eines Mehrlagenscanners oder eines Scanners mit zusätzlicher Abtastbewegung in Elevation sein.

Figur 2 zeigt eine Darstellung eines Fahrwegs 30 eines Fahrzeugs 32, das mit einem Sicherheitssensor 10 abgesichert wird. Der Sicherheitssensor 10 erkennt, plausibilisiert oder bestätigt durch Auswertung der Bilddaten auf sichere Weise in seinem Betriebsumfeld, wenn sich das Fahrzeug 32 an bestimmten Positionen 34a-c befindet, und vorzugsweise auch die Orientierung beziehungsweise Perspektive des Sicherheitssensors 10.

Dazu werden von der Steuer- und Auswertungseinheit 26 dreidimensionale Merkmale in den dreidimensionalen Bilddaten wiedererkannt, also beispielswese einfache oder komplexe Konturen oder Geometrien. Vorzugsweise werden markante Konturen oder Geometrien aus den dreidimensionalen extrahiert und mit Referenzkonturen oder -geometrien verglichen. Die erkannten dreidimensionalen Merkmale werden eindeutig einer bestimmen eigenen Position zugeordnet. Durch das dreidimensionale Sichtfeld stehen dafür vielfältige Bildinformationen zur Verfügung, so dass auch die Eindeutigkeitsprobleme mit einem lediglich eine Ebene überwachenden herkömmlichen Laserscanner nicht mehr auftreten. Außerdem bietet ein dreidimensionaler Überwachungsbereich 18 eine verlässlichere Absicherung gegenüber möglichen Aufenthaltsorten einer Person.

Eine Selbstlokalisierung ist grundsätzlich auch aus Navigationsanwendungen bekannt, mit oder ohne Vorgabe einer Umgebungskarte (SLAM, Simultaneous Localisation and Mapping). Solche Verfahren sind nicht sicher. Eine bestimmte Position 34a-c, die ausreichend markante Merkmale liefert oder auf andere Weise sicher bestimmt wird, kann jedoch mit derartigen Verfahren zusätzlich plausibilisiert werden.

Ein bevorzugtes Vorgehen, um die Sicherheit der Positionserfassung zu erhöhen, ist die Einbeziehung eines weiteren Datenkanals. Durch ein solches diversitär-zweikanaliges Vorgehen lässt sich die Zuverlässigkeit auf hohe Sicherheitsniveaus bringen. Vorzugsweise wird dafür ein zweidimensionales Bild des Bildsensors 24 einbezogen, das auch als Intensitäts- oder Grauwertbild bezeichnet wird. Dadurch kann der dreidimensionale Merkmalsvergleich um einen zweidimensionalen Merkmalsvergleich ergänzt werden. Beides beruht auf unterschiedlichen Messergebnissen, nämlich Abständen einerseits und Intensitäten oder Grauwerten andererseits. Auch eine Navigation, insbesondere wenn sie auf weiteren Messungen eines Inertialsensors (IMU, Inertial Measurement System) oder eines Indoor-GPS-Systems beruht, kann die Rolle des weiteren Datenkanals einnehmen.

Die jeweiligen dreidimensionalen oder zweidimensionalen Merkmale können an den Positionen 34a-c eingelernt und im Sicherheitssensor 10 gespeichert werden. Dazu ist ein Teachknopf oder ein elektronischer Teachbefehl vorgesehen, der jeweils an der Position 34a-c ausgelöst wird und bewirkt, dass der Sicherheitssensor 10 selbst nach geeigneten Merkmalen sucht. Es wäre auch denkbar, dass der Sicherheitssensor 10 selbst Positionen 34a-c wählt oder vorschlägt, in denen ausreichend Merkmale erkannt wurden, um diese Position 34a-c im späteren Betrieb sicher und eindeutig wiederzuerkennen.

Es ist nicht immer möglich, alle erforderlichen Positionen 34a-c allein mit natürlichen Markern zu finden, also den in der Szenerie des Überwachungsbereichs 18 ohnehin vorkommenden Merkmalen. Das gilt vor allem in Umgebungen mit wiederholten Konturen, wie bei mehreren baugleichen oder sehr ähnlichen Maschinen, Übergabestellen, Lagerregalen und dergleichen. Deshalb können künstliche Marker angebracht werden. Ein 3D-Marker wäre eine spezifische Kontur, als 2D-Marker eignen sich bestimmte Muster oder Piktogramme und vor allem optische Barcodes, 2D-Codes oder Schriften, die in dem Intensitätsbild mit an sich bekannten Decodier- oder OCR-Verfahren gelesen werden. Die codierte Information kann einfach die Position identifizieren, um sie eindeutig zuzuordnen, sie kann eine Positionsinformation in einem Koordinatensystem sein, aber auch eine konkrete Handlungsanweisung an den Sicherheitssensor 10, die gleichsam die Zuordnung einer sicherheitsrelevanten Funktion zu einer Position 34a-c ganz direkt schon in dem künstlichen Marker statt indirekt erst in der Steuer- und Auswertungseinheit 26 per Tabelle oder ähnlichem vornimmt.

Die künstlichen Marker können beispielsweise über einen Muster- oder Codegenerator einer Konfigurationssoftware erzeugt und auf Papier ausgedruckt oder in einem 3D-Drucker hergestellt werden. In der Konfigurationssoftware lässt sich zugleich eine Funktion an den künstlichen Marker binden, die an der zu markierenden Position 34a-c ausgeführt werden soll. Diese Verknüpfung kann im Marker codiert oder in der Steuer- und Auswertungseinheit 26 für die zugehörige Position 34a-c hinterlegt werden. Alternativ werden die Marker als Zubehörteil ergänzt und während der Konfiguration nach deren Erfassung durch den Sicherheitssensor 10 mit einer Funktion verknüpft. Weiterhin ist denkbar, dass der Sicherheitssensor 10 während des Einlernens der Positionen 34a-c auffordert, einen künstlichen Marker anzubringen, etwa wenn die natürlichen Marker nicht für ein eindeutiges Wiedererkennen ausreichen.

Mit der kombinierten 3D- und 2D-Information können außer geometrischen Konturen und Helligkeitsstrukturen auch Bewegungsmuster erkannt und für eine eindeutige Positionierung verwendet werden. Dazu werden die Bewegungen der dreidimensionalen beziehungsweise zweidimensionalen Merkmale verfolgt, im zweidimensionalen Teil beispielsweise durch Auswertung des optischen Flusses. Solche Bewegungen stellen zumindest in einigen Anwendungen eine Art Fingerabdruck dar, denn eine Maschine, ein Roboter oder ein Förderband werden einen sehr charakteristischen Bewegungsablauf zeigen, der sich zur eindeutigen Identifizierung verwenden lässt. Durch die Kombination von dreidimensionalen und zweidimensionalen Merkmalen wird diese Erkennung sicher. Anstelle einer zusätzlichen zweidimensionalen Auswertung oder in deren Ergänzung ist denkbar, dass der Sicherheitssensor 10 einen eigenen Inertialsensor (IMU) aufweist, um mehr positions- und bewegungsbezogene Erfassungsdaten zu gewinnen. Damit kann die Bewegung durch Integration der Beschleunigungen nachvollzogen werden, um Positionen 34a-c zu plausibilisieren. Besonders geeignet ist ein Inertialsensor, um die Lage oder Orientierung des Sicherheitssensors 10 zu erfassen oder zu plausibilisieren. Eine ergänzende oder alternative Möglichkeit zur Bestimmung der Orientierung ist, die Bodenebene samt deren Orientierung in den dreidimensionalen Bilddaten zu erkennen, was dann insbesondere in Beziehung zum Messergebnis des Inertialsensors gesetzt werden kann. So werden gegenüber der Einlernsituation veränderte Orientierungen durch Beschleunigung oder Beladung ebenso wie Rampen und ähnliche Bodenkonturen erkannt und sicherheitstechnisch verwendbar. Beispielsweise wird die eigene Position robuster erfasst, wenn eine etwaige Verdrehung der Bilddaten gegenüber der Referenzsituation heraustransformiert wird, ehe die eingelernten Merkmale mit den aufgenommenen Bilddaten verglichen werden.

Das zusätzliche Heranziehen der zweidimensionalen Bilddaten und Merkmale oder das Hinzufügen eines Inertialsensors sind zwei Beispiele dafür, wie durch mehrere diversitäre Informationen aus den dreidimensionalen Bilddaten des Sicherheitssensors 10 ein hohes Sicherheitsniveau erreicht wird. Anschaulicht ist das so etwas wie eine Zwei-Faktor-Authentifizierung einer sicherheitsrelevanten Erfassung.

Durch das sichere Bestimmen einer Position 34a-c, womöglich auch einer Orientierung, kann nun positionsspezifisch eine sicherheitsrelevante Funktion ausgelöst werden. Dafür kommen unter anderem eine Umschaltung von Schutzfeldern, ein Selbsttest oder eine Umkonfigurierung beziehungsweise Anpassung von Parametern in Betracht:
In verschiedenen Betriebsphasen erfordert die Absicherung mit dem Sicherheitssensors 10 unterschiedliche Schutzfeldgeometrien. Die Schutzfelder lassen sich in zwei Dimensionen, dank der dreidimensionalen Erfassung des Sicherheitssensors 10 aber auch in drei Dimensionen anpassen, indem beispielsweise bei Erreichen einer Engstelle für die Durchfahrt auf schmalere Schutzfelder umgeschaltet wird. Ein Beispiel einer Anpassung auch in Höhenrichtung ist eine Fahrt auf eine ansteigende Rampe, die von einem Laserscanner mangels Differenzierung in Höhenrichtung als Wand erkannt würde. Ein weiteres Beispiel ist die Einfahrt von Gabelzinken in eine Palette. Das durch Umschaltung angepasste Schutzfeld erlaubt hier, genau den Zwischenbereich vor der Palette zu überwachen und sich dynamisch während der Einfahrbewegung an die Geometrie anzupassen.

Ein Selbsttest des Sicherheitssensors 10 ist fast immer als Teil der Maßnahmen erforderlich, die den Sicherheitssensor 10 zu einem sicheren Sensor machen. Üblicherweise bleiben diese Selbsttests rein intern, etwa durch Anmessen eines internen Referenzziels oder Transmissionsmessungen einer Frontscheibe zur Verschmutzungserkennung. Aufgrund der Kenntnis der äußeren Szenerie an einer eingelernten Position 34a-c ist nun ein externer Selbsttest ermöglicht, in dem eine konkrete Erwartungshaltung an die Umgebungsgeometrie mit den Erfassungsdaten verglichen wird. Dadurch können interne Selbsttests ersetzt werden, um den Sicherheitssensor 10 zu vereinfachen und kostengünstiger zu machen, oder diese Selbsttests werden für ein noch höheres Sicherheitsniveau kombiniert. Als Beispiel kann ein Fahrzeug 32 jeweils bei Ankunft an einer Be- oder Entladestation durch die umgebende Kontur und möglicherweise künstliche zwei- oder dreidimensionale Marker einen sicheren Testtrigger erhalten, um daraufhin zu prüfen, ob die von der Szene empfangenen Signalstärken Hinweise auf einen Empfindlichkeitsverlust oder eine Verschmutzung des Sicherheitssensors 10 geben

Eine Umkonfigurierung oder Anpassung von Parametern des Sicherheitssensors 10 kann alle denkbaren Konfigurationsmöglichkeiten betreffen. Speziell genannt werden sollen Auflösung oder Detektionsvermögen, Mehrfachauswertung und Belichtungs- oder Integrationszeit.

Während der Fahrt sollen in der Regel Personen vor dem Fahrzeug 32 detektiert werden, wofür ein Detektionsvermögen von 70 mm für die Erkennung von Beinen geeignet ist. An Übergabe- oder Bearbeitungsstationen sollen dann aber auch Hände oder sogar Finger geschützt werden, und dementsprechend wird das Detektionsvermögen auf feinere Werte wie 30 mm oder 14 mm gesetzt. Mit solchen Maßnahmen werden auch bewegliche Vorrichtungen zum Unterstützen des Be- oder Entladens oder beispielsweise ein mobiler Roboterarm wirksam abgesichert.

Mehrfachauswertungen fordern, dass ein sicherheitsrelevantes Ereignis sich in m aus n Auswertungen bestätigt. Durch diese Parameter werden Ansprechzeit und Toleranz gegenüber kleinen Störobjekten wie Staub und dergleichen beeinflusst. Beispielsweise ist im fahrenden Transportbetrieb in der Regel ein langes Schutzfeld konfiguriert, um mit einer möglichst hohen Geschwindigkeit fahren zu können. Gleichzeitig ist eine hohe Anzahl an Mehrfachauswertungen eingestellt, um robust gegenüber Umwelteinflüssen zu sein und keine unnötigen Sicherheitsstopps aus hoher Geschwindigkeit zu veranlassen, da diese sehr materialbelastend sind. Beim Anfahren an eine Übergabestation dagegen kann es sinnvoll sein, auf ein kurzes Schutzfeld mit geringer Anzahl an Auswertungen umzuschalten, um in den beengten Platzverhältnissen mit kurzer Ansprechzeit zureagieren. In diesem Beispiel sind Umschaltung von Schutzfeldern und Anzahl Mehrfachauswertungen miteinander verknüpft, wobei aber in anderen Beispielen eine ebenso eine isolierte Veränderung vorstellbar ist.

Die Integrationszeit bestimmt bei dem Phasenverfahren der Lichtlaufzeitkamera gemäß Figur 1, wie lange jeweils Licht in den phasenzugeordneten Ladungsspeichern der Empfangspixel 24a gesammelt wird. Das bestimmt also die Empfindlichkeit der Messung, ebenso wie bei zweidimensionalen Bilddaten die Belichtungszeit. Wie im obigen Beispiel bereits ausgeführt, ist im fahrenden Transportbetrieb in der Regel ein langes Schutzfeld konfiguriert. Dafür sollte für eine hohe Reichweite eine lange Integrationszeit eingestellt sein. An einer Übergabestation kann es sinnvoll sein, mit den Schutzfeldern auch die Integrationszeit zu verkürzen, weil sonst Übersteuerungen drohen. Die Umschaltung von Schutzfeldern, Anzahl Mehrfachauswertung und Integrationszeit ist aber grundsätzlich nicht voneinander abhängig und kann einzeln oder in beliebigen Kombinationen vorgenommen werden.

Die sichere Erfassung der eigenen Position 34a-c und das Auslösen der sicherheitsrelevanten Funktion ist vorzugsweise eine autarke Fähigkeit des Sicherheitssensors 10, die keiner zusätzlichen angeschlossenen Sensoren, Sicherheitssteuerung, Fahrzeugsteuerung oder dergleichen bedarf. Umgekehrt kann es aber durchaus sinnvoll sein, eine sichere Position über die Schnittstelle 28 extern zur Verfügung zu stellen, etwa für die Fahrzeugsteuerung. Dort wird dann eine anwendungsspezifische Entscheidung oder Funktion ausgelöst. Beispielsweise werden so mehrere Sensoren miteinander koordiniert und sichere Positions-/Orientierungsinformationen miteinander abgeglichen, Betriebsparameter der Maschine umgeschaltet, oder es wird eine Mutingfunktion umgesetzt. Die Position wird vorzugsweise nicht als Koordinate, sondern nur als Positionsidentität ausgegeben, da ansonsten doch wieder eine höherwertige sichere Schnittstelle 28 erforderlich ist, was auch für eine größere Anzahl von Positionsidentitäten notwendig ist.

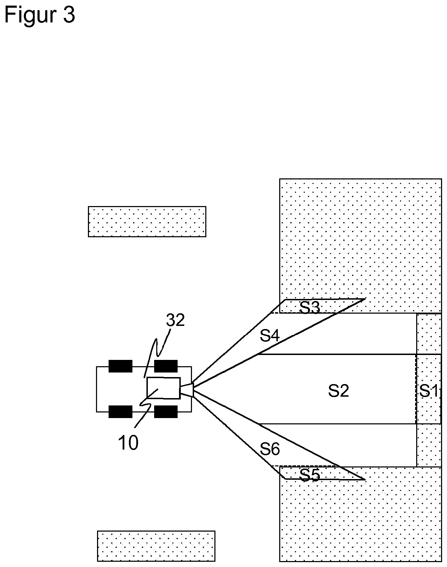

Figur 3 illustriert eine besonders einfach zu implementierende Konturerkennung mit Hilfe von Schutzfeldern. Dabei soll die dargestellte Position des Fahrzeugs 32 etwa an einer Übergabestation sicher erkannt werden. Nur eindeutig in dieser Position sind die Schutzfelder S1, S3, S5 verletzt und die übrigen Schutzfelder S2, S4, S6 frei. Durch passend konfigurierte Schutzfelder und Muster von verletzten und nicht verletzten Schutzfeldern werden so in einer zwar recht groben Körnung Konturen verglichen, die aber die Aufgabenstellung der eindeutigen sicheren Positionsbestimmung löst.

Dabei haben zumindest die Schutzfelder S1, S3, S5 keine eigentliche Schutzfunktion, sondern sind stummgeschaltet (Muting), lösen also keine sicherheitsgerichtete Reaktion aus. Sie nutzen aber die ohnehin vorhandene sichere Feldauswertung des Sicherheitssensors 10. Dabei ist der Rechenaufwand vergleichsweise gering, und vor allem muss nicht eigens ein sicherer dreidimensionaler Merkmals- beziehungsweise Konturvergleich samt Merkmalssuche implementiert werden. Durch den Einsatz von dreidimensionalen Schutzfeldern kann im Übrigen eine Mehrdeutigkeit an anderen, ähnlichen Übergabestationen aufgelöst werden, erforderlichenfalls mit Hilfe von künstlichen Konturen.

## Patentansprüche

1. Optoelektronischer 3D-Sicherheitssensor (10) zum Absichern einer beweglichen Maschine, der einen Lichtempfänger (24) zum sicheren Erfassen von dreidimensionalen Bilddaten eines Überwachungsbereichs (18) sowie eine Steuer- und Auswertungseinheit (26) aufweist, die dafür ausgebildet ist, aus den Erfassungsdaten die eigene Position (34a-c) anhand dreidimensionaler Merkmale sicher zu bestimmen, um positionsspezifisch eine sicherheitsrelevante Funktion auszulösen,
**dadurch gekennzeichnet,**
**dass** die Steuer- und Auswertungseinheit (26) weiterhin dafür ausgebildet ist, als positionsspezifische Funktion eine Umschaltung von Schutzfeldern vorzunehmen, das Detektionsvermögen, eine Anzahl von Mehrfachauswertungen und/oder eine Belichtungszeit zu verändern, wobei ein Schutzfeld ein konfigurierter Teilbereich des Überwachungsbereichs (18) ist, der während des Betriebs der Maschine vom Bedienpersonal nicht betreten werden darf und auf sicherheitsrelevante Eingriffe überwacht wird, um bei unzulässigem Schutzfeldeingriff eine sicherheitsgerichtete Reaktion der Maschine auszulösen, die in einem Abbremsen, Ausweichen oder notfalls einem sofortigen Stopp der Maschine besteht, wobei
das Detektionsvermögen die Eigenschaft bezeichnet, dass ein Objekt mit bestimmter Mindestgröße oder bestimmten Mindestabmessungen sicher erkannt wird und wobei Mehrfachauswertung bedeutet, dass ein sicherheitskritisches Ereignis in m aus n Wiederholungen bestätigt werden muss, ehe es eine sicherheitskritische Reaktion auslöst.

2. Sicherheitssensor (10) nach Anspruch 1,
wobei die Steuer- und Auswertungseinheit (26) dafür ausgebildet ist, eine Position (34a-c) anhand einer bekannten dreidimensionalen Kontur an dieser Position (34a-c) zu erkennen.

3. Sicherheitssensor (10) nach Anspruch 1 oder 2,
wobei die Erfassungsdaten zweidimensionale Bilddaten aufweisen und die Steuer- und Auswertungseinheit (26) dafür ausgebildet ist, die eigene Position (34a-c) anhand der zweidimensionalen Bilddaten und zweidimensionaler Merkmale zu bestimmen.

4. Sicherheitssensor (10) nach einem der vorhergehenden Ansprüche,
wobei die Steuer- und Auswertungseinheit (26) dafür ausgebildet ist, künstliche Marker zu erfassen, insbesondere eine Referenzkontur oder einen optischen Code, und für die Bestimmung der eigenen Position (34a-c) zu verwenden.

5. Sicherheitssensor (10) nach Anspruch 4,
wobei die Steuer- und Auswertungseinheit (26) dafür ausgebildet ist, eine in dem künstlichen Marker codierte Positionsinformation und/oder Handlungsanweisung auszulesen.

6. Sicherheitssensor (10) nach einem der vorhergehenden Ansprüche,
wobei die Steuer- und Auswertungseinheit (26) dafür ausgebildet ist, konfigurierte Felder (S1..S6) innerhalb des Überwachungsbereichs (18) auf Objekteingriffe zu überwachen und die eigene Position (34a-c) anhand verletzter und nicht verletzter Felder (S1..S6) zu bestimmen.

7. Sicherheitssensor (10) nach einem der vorhergehenden Ansprüche,
wobei die Steuer- und Auswertungseinheit (26) dafür ausgebildet ist, die eigene Position (34a-c) über die Zeit zu verfolgen und so zu plausibilisieren.

8. Sicherheitssensor (10) nach einem der vorhergehenden Ansprüche,
wobei die Steuer- und Auswertungseinheit (26) für eine Einlernfunktion ausgebildet ist, mit der auf Anforderung oder selbstständig Merkmale zum späteren sicheren Wiedererkennen einer Position (34a-c) bestimmt und gespeichert werden, und insbesondere eine Anforderung für das Anbringen eines künstlichen Markers auszugeben.

9. Sicherheitssensor (10) nach einem der vorhergehenden Ansprüche,
wobei der Sicherheitssensor (10) für eine autarke Bestimmung der eigenen Position (34a-c) ausgebildet ist und/oder wobei die Steuer- und Auswertungseinheit (26) dafür ausgebildet ist, die eigene Position (34a-c) an ein übergeordnetes System auszugeben.

10. Verfahren zur sicheren Bestimmung einer eigenen Position (34a-c) und zum Absichern einer beweglichen Maschine, bei dem mit einem Lichtempfänger (24) dreidimensionale Bilddaten eines Überwachungsbereichs (18) sicher erfasst und daraus anhand dreidimensionaler Merkmale die eigene Position (34a-c) bestimmt wird, um positionsspezifisch eine sicherheitsrelevante Funktion auszulösen,
**dadurch gekennzeichnet,**
**dass** als positionsspezifische Funktion eine Umschaltung von Schutzfeldern vorgenommen, das Detektionsvermögen, eine Anzahl von Mehrfachauswertungen und/oder eine Belichtungszeit verändert wird, wobei ein Schutzfeld ein konfigurierter Teilbereich des Überwachungsbereichs (18) ist, der während des Betriebs der Maschine vom Bedienpersonal nicht betreten werden darf und auf sicherheitsrelevante Eingriffe überwacht wird, um bei unzulässigem Schutzfeldeingriff eine sicherheitsgerichtete Reaktion der Maschine auszulösen, die in einem Abbremsen, Ausweichen oder notfalls einem sofortigen Stopp der Maschine besteht, wobei
das Detektionsvermögen die Eigenschaft bezeichnet, dass ein Objekt mit bestimmter Mindestgröße oder bestimmten Mindestabmessungen sicher erkannt wird und wobei Mehrfachauswertung bedeutet, dass ein sicherheitskritisches Ereignis in m aus n Wiederholungen bestätigt werden muss, ehe es eine sicherheitskritische Reaktion auslöst.

## Claims

1. An optoelectronic 3D safety sensor (10) for safeguarding a moving machine, comprising a light receiver (24) for safely detecting three-dimensional image data of a monitored area (18) and a control and evaluation unit (26) configured for a safe self-positioning (34a-c) on the basis of three-dimensional features using the detection data in order to trigger a safety-relevant function in a position-specific manner,
**characterized in that** the control and evaluation unit (26) is further configured to perform, as a position-specific function, a switchover of protective fields, a change of the detection capability, of a number of multiple evaluations and/or of an exposure time, wherein a protective field is a configured partial area of the monitoring area (18) which must not be entered by the operating personnel during operation of the machine and is monitored for safety-relevant intrusions, in order to trigger a safety-oriented reaction of the machine in the event of impermissible protective field intrusion, which reaction consists of braking, evasion or, if necessary, an immediate stop of the machine, wherein the detection capability denotes the property that an object of certain minimum size or certain minimum dimensions is safely detected and wherein multiple evaluation means that a safety-critical event must be confirmed in m out of n repetitions before it triggers a safety-related reaction.

2. The safety sensor (10) according to claim 1,
wherein the control and evaluation unit (26) is configured to detect a position (34a-c) by means of a known three-dimensional contour at this position (34a-c).

3. The safety sensor (10) according to claim 1 or 2,
wherein the detection data comprises two-dimensional image data and the control and evaluation unit (26) is configured for self-positioning (34a-c) on the basis of the two-dimensional image data and two-dimensional features.

4. The safety sensor (10) according to any of the preceding claims,
wherein the control and evaluation unit (26) is configured to detect artificial markers, in particular a reference contour or an optical code, and to use them for self-positioning (34a-c).

5. The safety sensor (10) according to claim 4,
wherein the control and evaluation unit (26) is configured to read out position information and/or action instructions encoded in the artificial marker.

6. The safety sensor (10) according to any of the preceding claims,
wherein the control and evaluation unit (26) is configured to monitor configured fields (S1..S6) within the monitoring area (18) for object intrusions, and for self-positioning (34a-c) on the basis of violated and non-violated fields (S1..S6).

7. The safety sensor (10) according to any of the preceding claims,
wherein the control and evaluation unit (26) is configured to track the self-positioning (34a-c) overtime and thus to plausibilize it.

8. The safety sensor (10) according to any of the preceding claims,
wherein the control and evaluation unit (26) is configured for a teach-in function for determining and storing, on request or self-initiated, features for subsequent safe recognition of a position (34a-c), and in particular to output a request for the application of an artificial marker.

9. The safety sensor (10) according to any of the preceding claims,
wherein the safety sensor (10) is configured for autonomous self-positioning (34a-c) and/or wherein the control and evaluation unit (26) is configured to output the position (34a-c) of the self-positioning to a higher-level system.

10. A method for safe self-positioning (34a-c) and for safeguarding a moving machine, wherein three-dimensional image data of a monitored area (18) is safely detected by a light receiver (24) and a position (34a-c) of a self-positioning is determined therefrom on the basis of three-dimensional features, in order to trigger a safety-relevant function in a position-specific manner,
**characterized in that**, as a position-specific function, a switchover of protective fields is performed, the detection capability, a number of multiple evaluations and/or an exposure time is changed, a protective field being a configured partial area of the monitoring area (18), which must not be entered by the operating personnel during operation of the machine and is monitored for safety-relevant intrusions in order to trigger a safety-oriented reaction of the machine in the event of impermissible protective field intrusion, which reaction consists of braking, evasion or, if necessary, an immediate stop of the machine, wherein the detection capability denotes the property that an object of certain minimum size or certain minimum dimensions is safely detected and wherein multiple evaluation means that a safety-critical event must be confirmed in m out of n repetitions before it triggers a safety-related reaction.

## Revendications

1. Capteur de sécurité 3D optoélectronique (10) destiné à sécuriser une machine mobile, comportant un récepteur de lumière (24) pour la détection sûre de données d'image tridimensionnelles d'une zone à surveiller (18) et une unité de commande et d'évaluation (26) qui est réalisée pour déterminer de manière sûre sa propre position (34a-c) à partir des données de détection sur la base de caractéristiques tridimensionnelles, afin de déclencher une fonction de sécurité de manière spécifique à la position, **caractérisé en ce que**
l'unité de commande et d'évaluation (26) est en outre réalisée pour effectuer, en tant que fonction spécifique à la position, une commutation de champs de protection, pour modifier la capacité de détection, un nombre d'évaluations multiples et/ou un temps d'exposition, un champ de protection étant une zone partielle configurée de la zone à surveiller (18), qui ne doit pas être pénétrée par le personnel de service pendant le fonctionnement de la machine et qui est surveillée quant à des interventions relatives à la sécurité, afin de déclencher une réaction orientée sécurité de la machine en cas d'intervention inadmissible dans le champ de protection, réaction qui consiste à freiner, à éviter ou, si nécessaire, à arrêter immédiatement la machine, la capacité de détection désignant la propriété selon laquelle un objet d'une certaine taille minimale ou de certaines dimensions minimales est détecté de manière sûre, et l'évaluation multiple signifiant qu'un événement critique en termes de sécurité doit être confirmé dans m répétitions sur n avant de déclencher une réaction critique en termes de sécurité.

2. Capteur de sécurité (10) selon la revendication 1,
dans lequel l'unité de commande et d'évaluation (26) est réalisée pour reconnaître une position (34a-c) sur la base d'un contour tridimensionnel connu à cette position (34a-c).

3. Capteur de sécurité (10) selon la revendication 1 ou 2,
dans lequel les données de détection comprennent des données d'image bidimensionnelles, et l'unité de commande et d'évaluation (26) est réalisée pour déterminer sa propre position (34a-c) sur la base des données d'image bidimensionnelles et des caractéristiques bidimensionnelles.

4. Capteur de sécurité (10) selon l'une des revendications précédentes, dans lequel l'unité de commande et d'évaluation (26) est réalisée pour détecter des repères artificiels, en particulier un contour de référence ou un code optique, et pour les utiliser pour déterminer sa propre position (34a-c).

5. Capteur de sécurité (10) selon la revendication 4,
dans lequel l'unité de commande et d'évaluation (26) est réalisée pour lire des informations de position et/ou des instructions d'action codées dans le repère artificiel.

6. Capteur de sécurité (10) selon l'une des revendications précédentes, dans lequel l'unité de commande et d'évaluation (26) est réalisée pour surveiller des champs configurés (S1..S6) à l'intérieur de la zone à surveiller (18) quant à des interventions sur des objets et pour déterminer sa propre position (34a-c) sur la base de champs violés et non violés (S1..S6).

7. Capteur de sécurité (10) selon l'une des revendications précédentes, dans lequel l'unité de commande et d'évaluation (26) est réalisée pour suivre sa propre position (34a-c) dans le temps et pour ainsi vérifier sa plausibilité.

8. Capteur de sécurité (10) selon l'une des revendications précédentes, dans lequel l'unité de commande et d'évaluation (26) est réalisée pour une fonction d'apprentissage avec laquelle des caractéristiques pour une reconnaissance ultérieure sûre d'une position (34a-c) sont déterminées et mémorisées sur demande ou automatiquement, et en particulier pour émettre une demande d'application d'un repère artificiel.

9. Capteur de sécurité (10) selon l'une des revendications précédentes, dans lequel le capteur de sécurité (10) est réalisé pour une détermination autonome de sa propre position (34a-c), et/ou l'unité de commande et d'évaluation (26) est réalisée pour émettre sa propre position (34a-c) vers un système prépondérant.

10. Procédé pour déterminer de manière sûre une propre position (34a-c) et pour sécuriser une machine mobile, dans lequel des donnés d'image tridimensionnelles d'une zone à surveiller (18) sont détectées de manière sûre au moyen d'un récepteur de lumière (24), et sa propre position (34a-c) est déterminée à partir de celles-ci sur la base de caractéristiques tridimensionnelles, afin de déclencher de manière spécifique à la position une fonction de sécurité,
**caractérisé en ce que**
en tant que fonction spécifique à la position, on effectue une commutation de champs de protection, on modifie la capacité de détection, un nombre d'évaluations multiples et/ou un temps d'exposition, un champ de protection étant une zone partielle configurée de la zone à surveiller (18), qui ne doit pas être pénétrée par le personnel de service pendant le fonctionnement de la machine et qui est surveillée quant à des interventions relatives à la sécurité, afin de déclencher une réaction orientée sécurité de la machine en cas d'intervention inadmissible dans le champ de protection, réaction qui consiste à freiner, à éviter ou, si nécessaire, à arrêter immédiatement la machine, la capacité de détection désignant la propriété selon laquelle un objet d'une certaine taille minimale ou de certaines dimensions minimales est détecté de manière sûre, et l'évaluation multiple signifiant qu'un événement critique en termes de sécurité doit être confirmé dans m répétitions sur n avant de déclencher une réaction critique en termes de sécurité.
